# EUROPÄISCHE PATENTANMELDUNG

(11) **EP 1 571 421 A1**
(43) Veröffentlichungstag der Anmeldung: **07.09.2005**
(21) Anmeldenummer: 04005214.4
(22) Anmeldetag: 05.03.2004
(51) Int. Cl.: G01D 3/028, G01D 5/16, G01D 5/245, G01B 5/00

(54) **Linearantriebsvorrichtung**

(71) Anmelder: FESTO AG & Co, 73734 Esslingen (DE)
(72) Erfinder: Finkbeiner, Matthias, Dipl.-Ing. (FH), 71159 Mötzingen (DE); Naumann, Frank, Dipl.-Ing., 73770 Denkendorf (DE)
(74) Vertreter: Abel, Martin

(57) **Zusammenfassung**

Es wird eine Linearantriebsvorrichtung (1) vorgeschlagen, die ein Wegmesssystem (28) aufweist, das eine an einer ersten Vorrichtungskomponente (2) angeordnete streifenförmige Maßverkörperung (32) und einen an einer zweiten Vorrichtungskomponente (3) angeordneten Messaufnehmer (33) beinhaltet. Werden die beiden Vorrichtungskomponenten (2, 3) relativ zueinander bewegt, verlagert sich der Messaufnehmer (33) entlang einer Messstrecke (42) entlang der Maßverkörperung (32). Letztere beinhaltet eine Maßstreifeneinheit (37), die sich aus einem als Faserverbundkörper ausgeführten Trägerstreifen (36) und einem daran fixierten Magnetstreifen (34) zusammensetzt. Diese beiden Streifen sind so aufeinander abgestimmt, dass der Wärmeausdehnungskoeffizient der Maßstreifeneinheit (37) zumindest annähernd gleich null ist. Die Messstrecke (42) ist von einem Längenabschnitt (43) der Maßstreifeneinheit (37) gebildet, der einenends fest mit der ersten Vorrichtungskomponente (2) verbunden und im Übrigen schwimmend bezüglich der ersten Vorrichtungskomponente angeordnet ist. Auf diese Weise wird eine gegen Temperaturschwankungen weniger anfällige, hohe Messgenauigkeit erzielt.

## Beschreibung

Die Erfindung betrifft eine Linearantriebsvorrichtung, mit einer ersten und einer zweiten Vorrichtungskomponente, von denen die eine relativ zur anderen zu einer linearen Arbeitsbewegung antreibbar ist, und mit einem Wegmesssystem zur Erfassung der momentan zwischen den beiden Vorrichtungskomponenten eingenommenen Relativposition, das eine an der ersten Vorrichtungskomponente angeordnete, in Richtung der Arbeitsbewegung ausgerichtete streifenförmige Maßverkörperung mit einer aus einem Trägerstreifen und einem längsseits daran befestigten, wechselpolig magnetisierten Magnetstreifen bestehenden Maßstreifeneinheit aufweist, und das einen an der zweiten Vorrichtungskomponente angeordneten, zum berührungslosen Abtasten des Magnetstreifens dienenden Messaufnehmer aufweist, wobei sich der Messaufnehmer und die Maßverkörperung bei der Arbeitsbewegung entlang einer Messstrecke der Maßstreifeneinheit relativ zueinander bewegen.

Eine aus der EP 0695879 B1 bekannte Linearantriebsvorrichtung dieser Art ist als Arbeitszylinder ausgebildet und verfügt über zwei Vorrichtungskomponenten in Gestalt eines Gehäuses und einer diesbezüglich bewegbaren Kolben-Kolbenstangen-Einheit. In die Kolbenstange ist eine Maßverkörperung integriert, die eine Maßstreifeneinheit umfasst, die sich aus einem Trägerstreifen und einem längsseits daran befestigten, wechselpolig magnetisierten Magnetstreifen zusammensetzt. Die Maßverkörperung ist in eine Längsnut der Kolbenstange fest eingeklebt, sodass sich der Magnetstreifen bei der linearen Arbeitsbewegung der Kolben-Kolbenstangen-Einheit mit einem eine Messstrecke definierenden Längenabschnitt an einem am Gehäuse angeordneten Messaufnehmer vorbeibewegt und darauf aufbauend eine Positionserfassung der Kolben-Kolbenstangen-Einheit möglich ist.

Das bekannte Wegmesssystem leistet gute Dienste, wenn an die Messgenauigkeit keine sehr hohen Anforderungen gestellt werden und Toleranzen bis +/- 0,05 mm zulässig sind. Auf Temperaturschwankungen basierende Messfehler sind daher in den meisten Fällen vernachlässigbar. Allerdings wird zunehmend eine höhere Messgenauigkeit gefordert, vor allem auch im Zusammenhang mit elektrisch betriebenen Linearantriebsvorrichtungen. Hier tritt jedoch die Temperaturproblematik in besonderem Maße in Erscheinung, weil - vor allem bei elektrodynamischen Lineardirektantrieben - eine relativ große Abwärme auftritt, die zu großen Temperaturschwankungen und dadurch zu unkontrollierbaren starken Wärmeausdehnungen an den einzelnen Vorrichtungskomponenten führen kann. Beispielhaft sei auf die WO 03/015247 A1 verwiesen, die einen solchen elektrodynamischen Lineardirektantrieb offenbart.

Die auftretenden Temperaturschwankungen führen nicht nur zu Wärmedehnungen der einzelnen Vorrichtungskomponenten, sondern auch zu einer Längenänderung der Maßstreifeneinheit. Darunter leidet die Positioniergenauigkeit für die bewegte Vorrichtungskomponente.

Die gleiche Problematik ergibt sich bei der aus der DE 10254358 A1 bekannten Linearantriebsvorrichtung. Diese unterscheidet sich von derjenigen der EP 0695879 B1 allerdings dadurch, dass die Maßstreifeneinheit an der Stationärkomponente und der Messaufnehmer an der diesbezüglich bewegbaren Abtriebskomponente - hier ein Schlitten - angeordnet ist.

Die DE 19939659 A1 beschreibt eine Längenmessvorrichtung, die eine Maßverkörperung aufweist, welche ein aus Stahl, Kunststoff, Kohlefaserstoff oder Glasfaser bestehendes Trägerband und ein darauf angeordnetes Magnetband enthält. Eine das Magnetband umschließende, am Trägerband befestigte Schutzfolie dient zum Schutz und zum Fixieren des Magnetstreifens.

Die DE 3623217 A1 befasst sich bereits mit der Problematik von Temperaturschwankungen im Zusammenhang mit einem Längenmesssystem. Das Messsystem verfügt über ein Gehäuse, in dem sich eine Maßverkörperung befindet, der ein als Messaufnehmer fungierender Abtastschlitten zugeordnet ist. Die Maßverkörperung ist unter Zwischenschaltung eines Zwischenstückes am Gehäuse befestigt. Das Gehäuse ist aus einem hochleistungsfaserverstärkten Metall- oder Plastikwerkstoff hergestellt, beispielsweise ein Kohlenstofffaser-Glasfaser-Mischlaminat -, dessen Wärmeausdehnungskoeffizient mit dem der Maßverkörperung und/oder dem des Zwischenstückes weitestgehend übereinstimmt. Auf diese Weise verfügen alle Komponenten über die gleiche Wärmeausdehnung. Messungenauigkeiten, die sich aus der Wärmedehnung als solches ergeben, können dadurch allerdings nicht verhindert werden.

Schließlich beschreibt die EP 0866304 A1 ein Längenmesssystem, das einen mit einer Messteilung versehenen bandförmigen Teilungsträger aufweist, der einenends an einem Messobjekt befestigt ist und dessen unbefestigter Längenabschnitt in einen mit einer Abtasteinrichtung ausgestatteten Abtastkopf eintaucht, der an einem weiteren Messobjekt fixiert ist. Um ein Verkanten des Teilungsträgers aufgrund der nicht-linearen Relativbewegung zwischen den beiden Messobjekten zu verhindern, ist der Teilungsträger an der dem ersten Messobjekt zugeordneten Befestigungsstelle in Querrichtung federelastisch aufgehängt. Dies ermöglicht ein seitliches Auslenken des Teilungsträgers und dadurch eine Wegmessung auch bei einer nicht-linearen Relativbewegung zwischen den beiden Messobjekten.

Es ist die Aufgabe der vorliegenden Erfindung, eine Linearantriebsvorrichtung zu schaffen, die auch bei größeren Temperaturschwankungen eine exakte Positionserfassung der sich relativ zueinander bewegenden Vorrichtungskomponenten ermöglicht.

Zur Lösung dieser Aufgabe ist vorgesehen, dass die Messstrecke von einem Längenabschnitt der Maßstreifeneinheit gebildet ist, der mit einem Befestigungsende in Richtung der Arbeitsbewegung unbeweglich an einer Bezugsstelle der ersten Vorrichtungskomponente fixiert und im Übrigen zumindest in Richtung der Arbeitsbewegung schwimmend bezüglich der ersten Vorrichtungskomponente angeordnet ist, sodass die Messstrecke hinsichtlich Längsdehnungen von der ersten Vorrichtungskomponente entkoppelt ist, und dass der Trägerstreifen als Verstärkungsfasern enthaltender Faserverbundkörper ausgeführt ist, der so auf den an ihm befestigten Magnetstreifen abgestimmt ist, dass der Wärmeausdehnungskoeffizient der Maßstreifeneinheit in Längsrichtung zumindest annähernd gleich null ist.

Durch die axial schwimmende Lagerung des die Messstrecke definierenden Längenabschnittes der Maßstreifeneinheit ergibt sich für die Messstrecke die Möglichkeit, sich unabhängig von der die Maßverkörperung tragenden ersten Vorrichtungskomponente ausdehnen zu können. Mit anderen Worten zwingt also eine auf Temperaturschwankungen zurückzuführende Längenänderung der ersten Vorrichtungskomponente die Messstrecke nicht zu einer entsprechenden Maßveränderung. Selbst wenn die erste Vorrichtungskomponente aufgrund einer entsprechenden Materialwahl über einen relativ hohen Wärmeausdehnungskoeffizienten verfügt, kann somit eine davon unabhängige Wegmessung garantiert werden. Der weiterhin auftretende Messfehler hängt somit allein nur noch vom Wärmeausdehnungskoeffizienten der Maßstreifeneinheit ab. Da dieser jedoch durch entsprechende Materialabstimmung auf einen Wert von annähernd oder gleich null eingestellt ist, bleibt der mögliche Messfehler minimal. Die entsprechende Null-Abstimmung des Wärmeausdehnungskoeffizienten wird durch die Realisierung des Trägerstreifens als Faserverbundkörper ermöglicht, weil hier Verstärkungsfasern einsetzbar sind, deren in Längsrichtung gemessener Wärmeausdehnungskoeffizient kleiner als null ist. Man kann somit eine eventuelle positive Wärmedehnung des Magnetstreifens durch eine negative Wärmedehnung des mit dem Magnetstreifen über die gesamte Länge fest verbundenen Trägerstreifens kompensieren und auf das gewünschte Maß einstellen.

Als besonders vorteilhaft zur Verwendung als Verstärkungsfasern innerhalb des Faserverbundkörpers erweisen sich Kohlenstofffasern, beispielsweise sogenanntes Tenax, und Aramidfasern, beispielsweise sogenanntes Kevlar. Die Verstärkungsfasern können jeweils vollständig aus der einen oder anderen Faserart bestehen oder als Fasermischung ausgeführt werden. Besonders vorteilhaft erweist sich eine Realisierung der Verstärkungsfasern als Fasergewebe, das in ein für eine glattflächige Oberfläche sorgendes Harz eingebettet ist.

Die längsseits feste Verbindung zwischen dem Magnetstreifen und dem Trägerstreifen lässt sich insbesondere durch ein vollständiges Verkleben der beiden Streifen erzielen.

Um die aus den polarisierten Zonen resultierenden Magnetfelder zu verstärken, können der Maßstreifeneinheit ferromagnetische Rückschlussmittel zugeordnet sein. Besteht die erste Vorrichtungskomponente in dem sich längs der Maßstreifeneinheit erstreckenden Bereich bereits aus einem ferromagnetischen Material, kann dieses die Rückschlussmittel bilden, sodass seitens der Maßverkörperung auf entsprechende gesonderte Rückschlussmaßnahmen verzichtet werden kann. Die Maßverkörperung kann in diesem Falle ausschließlich aus der Maßstreifeneinheit bestehen.

Fehlen hingegen in der Nachbarschaft der Maßstreifeneinheit geeignete ferromagnetische Eigenschaften der ersten Vorrichtungskomponente, kann die Maßverkörperung selbst zusätzlich mit einem sich parallel zu der Maßstreifeneinheit erstreckenden ferromagnetischen Rückschlussstreifen versehen sein. Allerdings wird man diesen Rückschlussstreifen aufgrund seines relativ hohen Wärmeausdehnungskoeffizienten nicht über die gesamte Länge fest mit der Maßstreifeneinheit verbinden, sondern lediglich an dem Befestigungsende, und im Übrigen eine schwimmende, insbesondere komplett lose Anordnung vorsehen. Dies ermöglicht die Realisierung einer relativ hohen Signalstärke unter Beibehaltung der oben schon erläuterten Entkopplung der Messstrecke von etwaigen, sich auf die Verformung auswirkenden Umständen.

Da die streifenförmige Maßverkörperung nur einenends an der ersten Vorrichtungskomponente befestigt ist, können, sofern keine ausreichende Eigensteifigkeit vorhanden ist, zusätzliche Abstützmaßnahmen zur Querabstützung der Maßverkörperung vorgesehen werden, die die relative Beweglichkeit zwischen der ersten Vorrichtungskomponente und der Maßstreifeneinheit in Richtung der Arbeitsbewegung nicht beeinträchtigen.

Zusätzlich oder alternativ besteht auch die Möglichkeit, die lineare Gestalt der Maßverkörperung durch eine an dem dem Befestigungsende entgegengesetzten Ende angreifende Stabilisierungsfeder zu gewährleisten, durch die die Maßstreifeneinheit unter axiale Zugvorspannung gesetzt wird.

Bei der Linearantriebsvorrichtung kann es sich sowohl um einen durch Fluidkraft als auch um einen elektrisch angetriebenen Typ handeln. Auch Mischformen sind möglich. Insbesondere kann es sich um einen elektrodynamischen Lineardirektantrieb handeln, da die bei solchen Antrieben üblicherweise auftretende Wärmeentwicklung die Messgenauigkeit des Wegmesssystems nur gering beeinflusst.

Nachfolgend wird die Erfindung anhand der beiliegenden Zeichnung näher erläutert. In dieser zeigen:
- Fig. 1: in einer schematischen Seitenansicht eine bevorzugte erste Bauform der Linearantriebsvorrichtung in einer fluidbetätigten Ausführung,
- Fig. 2: den in Fig. 1 bei II markierten Ausschnitt in schematischer, vergrößerter Darstellung,
- Fig. 3: die schematisierte Stirnansicht einer elektrisch betätigten Ausführungsform der Linearantriebsvorrichtung,
- Fig. 4: einen Längsschnitt durch die Anordnung aus Fig. 3 gemäß Schnittlinie IV-IV,
- Fig. 5: die bei der Anordnung gemäß Fig. 3 und 4 verwendete Maßverkörperung in einer vergrößerten Einzeldarstellung und
- Fig. 6: eine alternative Bauform einer wie bei der Ausführungsform der Fig. 5 mit einem ferromagnetischen Rückschlussstreifen ausgestatteten Maßverkörperung.

Die abgebildeten, jeweils in ihrer Gesamtheit mit Bezugsziffer 1 bezeichneten Linearantriebsvorrichtungen enthalten jeweils eine erste (2) und eine zweite (3) Vorrichtungskomponente, deren eine jeweils bezüglich der anderen zu einer durch einen Doppelpfeil angedeuteten linearen Arbeitsbewegung 4 antreibbar ist.

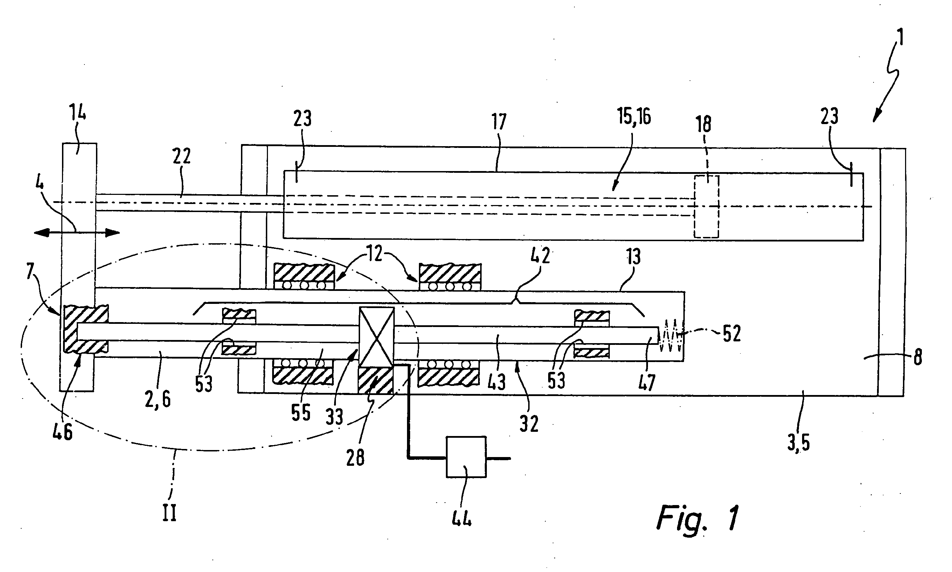

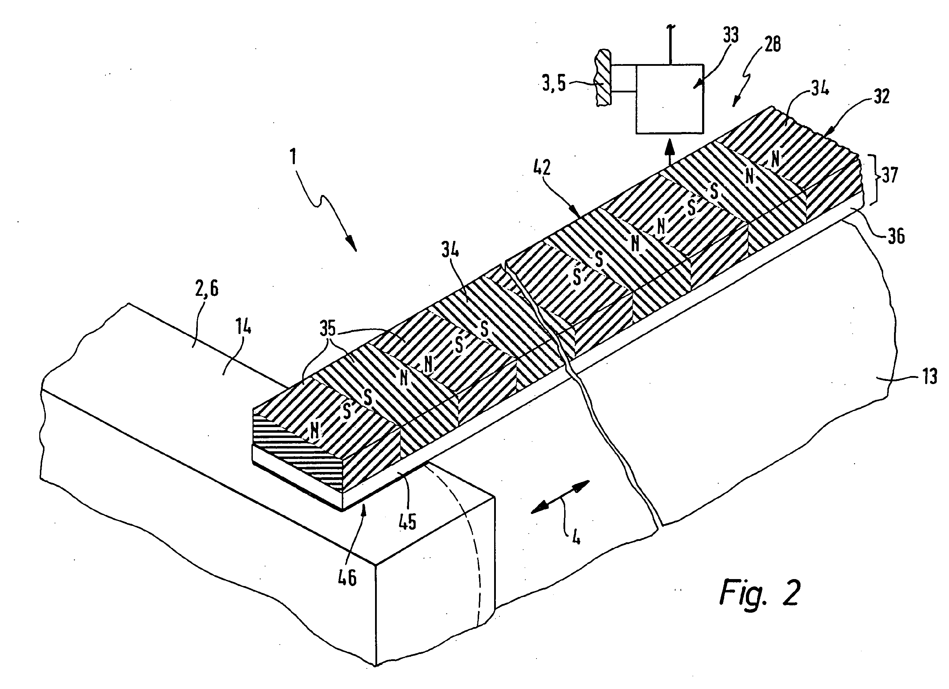

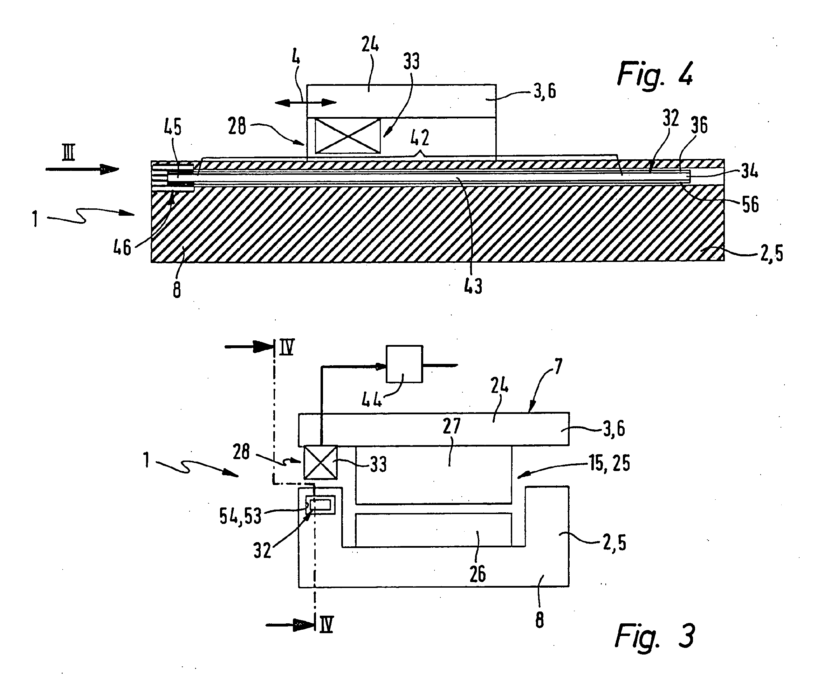

Bei dem Ausführungsbeispiel der Fig. 1 und 2 ist die zweite Vorrichtungskomponente 3 als im Betrieb ortsfeste Stationärkomponente 5 ausgeführt, während die erste Vorrichtungskomponente 2 eine die Arbeitsbewegung 4 ausführende Abtriebskomponente darstellt. Bei der Bauform der Fig. 3 bis 5 sind die Verhältnisse gerade umgekehrt.

An der Abtriebskomponente 6 befindet sich mindestens eine Schnittstelle 7, der nicht näher dargestellte Befestigungsmittel zugeordnet sind, sodass sich an ihr eine linear zu bewegende Last befestigen lässt. Bei dieser Last kann es sich beispielsweise um ein Teil einer Maschine in der Fertigungs- und/oder Montagetechnik handeln. Ferner könnte die Last beispielsweise ein Greifer sein, mit dem sich Gegenstände erfassen lassen, die zwischen unterschiedlichen Örtlichkeiten umpositioniert werden sollen. In diesem Falle kann die Linearantriebsvorrichtung 1 Bestandteil einer Handhabungseinrichtung sein oder eine solche unmittelbar bilden.

Bei dem Ausführungsbeispiel der Fig. 1 und 2 verfügt die Stationärkomponente 5 über eine insbesondere als Gehäuse ausgebildete Basisstruktur 8, an der unter Mitwirkung geeigneter Linearführungsmittel 12 ein zur Abtriebskomponente 6 gehörendes, stangen- oder rohrförmiges Führungsteil 13 in Richtung der Arbeitsbewegung 4 verschiebbar geführt ist. An einer Stirnseite des Führungsteils 13 befindet sich ein die Schnittstelle 7 aufweisendes Kraftübertragungsjoch 14. Antriebsmittel 15 in Gestalt eines durch Fluidkraft betätigbaren Linearantriebes 16 wirken zwischen der Stationärkomponente 5 und der Abtriebskomponente 6 und ermöglichen es, die zum Hervorrufen der Arbeitsbewegung 4 benötigte Antriebskraft auf die Abtriebskomponente 6 zu übertragen.

Bei dem gezeigten Ausführungsbeispiel ist der fluidbetätigte Linearantrieb 16 nach Art eines Arbeitszylinders ausgeführt und verfügt über ein an der Basisstruktur 8 angeordnetes oder von dieser gebildetes Antriebsgehäuse 17, in dem ein Kolben 18 verschiebbar angeordnet ist, der mit einer Kolbenstange 22 verbunden ist, die aus dem Antriebsgehäuse 17 herausragt und an dem Kraftübertragungsjoch 14 angreift. Der Kolben 18 unterteilt das Innere des Antriebsgehäuses 17 in zwei Arbeitsräume, die über Anschlusskanäle 23 gesteuert mit Fluid beaufsehlagbar sind, um den Kolben 18 und mithin die gesamte Abtriebskomponente 6 linear zu verschieben und nach Bedarf zu positionieren.

Der fluidbetätigte Linearantrieb 16 könnte auch in kolbenstangenloser Bauform ausgeführt sein. Ferner besteht die Möglichkeit einer alternativen Realisierung als elektrisch betätigter Linearantrieb, insbesondere als sogenannter elektrodynamischer Lineardirektantrieb.

Auf einem solchen basiert das bei der Bauform der Fig. 3 bis 5 realisierte Antriebsprinzip. Im Einzelnen verfügt hier die Stationärkomponente 5 über eine langgestreckte Basisstruktur 8, an der ein zur Abtriebskomponente 6 gehörender Schlitten 24 unter Zwischenschaltung nicht näher gezeigter Linearführungsmittel in Richtung der Arbeitsbewegung 4 verstellbar geführt ist. Die Schnittstelle 7 befindet sich an dem Schlitten 24. Die zwischen der Stationärkomponente 5 und der Abtriebskomponente 6 wirksamen Antriebsmittel 15 bilden einen elektrodynamischen Lineardirektantrieb 25 und enthalten ein an der Basisstruktur 8 angeordnetes, getaktet mit einer Erregerspannung beaufschlagbares Spulensystem 26 und ein an der Abtriebskomponente 6 vorgesehenes, mehrere axial aufeinanderfolgend angeordnete Permanentmagnete enthaltendes Magnetsystem 27. Durch Erregung des Spulensystems 26 kann das Magnetsystem 27 und somit die gesamte Abtriebskomponente 6 zu einer linearen Arbeitsbewegung 4 veranlasst werden. Die Anordnung des Spulensystems 26 und des Magnetsystems 27 könnte auch vertauscht sein.

Jede Linearantriebsvorrichtung 1 ist mit einem Wegmesssystem 28 ausgestattet, das eine Erfassung der momentan zwischen den beiden Vorrichtungskomponenten 2, 3 eingenommenen Relativposition ermöglicht. Genauer gesagt kann die relativ zur Stationärkomponente 5 eingenommene momentane, als Arbeitsposition bezeichenbare Position der Abtriebskomponente 6 erfasst werden. Auf der Basis des erhaltenen Messergebnisses können die Antriebsmittel 15 so angesteuert werden, dass die Abtriebskomponente 6 einen gewünschten Bewegungsablauf durchführt und/oder in einer gewünschten Weise positioniert wird. Es besteht beispielsweise die Möglichkeit, durch entsprechende Ansteuerung auf der Basis der Messergebnisse zu erreichen, dass die Abtriebskomponente 6 ausgehend von einer Grundposition bis zu einer vorherbestimmten Arbeitsposition verlagert wird, um beispielsweise ein nicht näher dargestelltes Bauteil dementsprechend umzupositionieren.

Das Wegmesssystem 28 besitzt eine an der ersten Vorrichtungskomponente 2 angeordnete streifenförmige Maßverkörperung 32, die in Richtung der Arbeitsbewegung, also parallel zu dieser, ausgerichtet ist. Der Maßverkörperung 32 zugeordnet ist ein an der zweiten Vorrichtungskomponente 3 angeordneter Messaufnehmer 33, der bei den Ausführungsbeispielen längsseits neben der Maßverkörperung 32 angeordnet ist, diese aber auch zumindest teilweise umschließen kann. Während der Arbeitsbewegung 4 findet eine lineare Relativbewegung zwischen dem Messaufnehmer 33 und der Maßverkörperung 32 statt, während der der Messaufnehmer 33 Betätigungssignale von der Maßverkörperung 32 empfängt, die die oben geschilderte Positionserfassung ermöglichen.

Die Betätigungssignale werden hervorgerufen von einem wechselpolig magnetisierten Magnetstreifen 34 der Maßverkörperung 32. Der Magnetstreifen 34 ist in der Regel ein Kunststoffstreifen mit magnetisierbaren Bestandteilen oder Partikeln, prinzipiell vergleichbar mit den als Tonträgern dienenden Magnetbändern von Tonband- oder Videogeräten. Durch die wechselpolige Magnetisierung ist der Magnetstreifen 34 in eine Vielzahl in Längsrichtung aufeinanderfolgender Magnetzonen 35 unterteilt, die in der Streifen-Längsrichtung abwechselnd gegensinnig polarisiert sind, sodass bei jeweils aufeinanderfolgenden Magnetzonen 35 identisch polarisierte Bereiche einander zugewandt sind.

Die Maßverkörperung 32 besitzt ferner einen Trägerstreifen 36 mit gleicher Länge wie der Magnetstreifen 34, der mit einer seiner größeren Flächen an einer der größeren Flächen des Magnetstreifens 34 längsseits befestigt ist. Die Befestigungsmaßnahme erstreckt sich über die gesamte Streifenlänge mit in Längsrichtung insbesondere durchgängiger fester Verbindung, die bevorzugt durch ein vollflächiges Verkleben zwischen dem Magnetstreifen 34 und dem Trägerstreifen 36 erhalten wird. Auf diese Weise bilden der Magnetstreifen 34 und der Trägerstreifen 36 einen festen Streifenverbund, der als Maßstreifeneinheit 37 bezeichnet sei.

Bei der Arbeitsbewegung 4 bewegt sich der Messaufnehmer 33 entlang einer von der Maßsteifeneinheit 37 definierten Messstrecke 42, und der beispielsweise als Hall-Sensor oder als magnetoresistiver Sensor ausgeführte Messaufnehmer empfängt von der wechselnden Polarisierung hervorgerufene magnetische Betätigungssignale des Magnetstreifens 34, welche Aufschluss über die momentane Position der Abtriebskomponente 6 geben. Entsprechend den erhaltenen Betätigungssignalen gibt der Messaufnehmer 33 Erfassungssignale aus, die einer Auswerte- und/oder Steuereinrichtung 44 zugeführt werden, die an der Ansteuerung der Linearantriebsvorrichtung 1 mitwirkt.

Bei jedem Ausführungsbeispiel ist die Messstrecke 42 von einem Längenabschnitt 43 der Maßstreifeneinheit 37 gebildet, der einenends, mit einem Befestigungsende 45, an einer ersten Bezugsstelle 46 an der ersten Vorrichtungskomponente 2 fixiert ist. Die Art der Fixierung ist so gewählt, dass das Befestigungsende in Richtung der Arbeitsbewegung 4 relativ zur ersten Vorrichtungskomponente 2 unbeweglich festgehalten ist.

Der übrige Bereich des Längenabschnittes 43 der Maßstreifeneinheit 37, also ausgehend vom Befestigungsende 45 bis hin und einschließlich zum entgegengesetzten freien Ende 47 der Maßstreifeneinheit 37, ist zumindest in der Richtung der Arbeitsbewegung 4 schwimmend bezüglich der ersten Vorrichtungskomponente 2 angeordnet. Der die Messstrecke 42 definierende Längenabschnitt 43 ist mithin, was die Längsdehnungen des Materials anbelangt, von der ersten Vorrichtungskomponente 2 entkoppelt. Die erste Vorrichtungskomponente 2 kann also Längsdehnungen ausführen, ohne dass diese zwangsweise auf den die Messstrecke 42 definierenden Längenabschnitt 43 der Maßstreifeneinheit 37 übertragen werden.

Zweckmäßigerweise ist also die Maßstreifeneinheit 37 ausschließlich an einem ihrer beiden Endbereiche axial unbeweglich an der ersten Vorrichtungskomponente 2 befestigt, während sie im Übrigen, wenigstens in der Richtung der Arbeitsbewegung 4, Relativbewegungen mit Bezug zur ersten Vorrichtungskomponente 2 ausführen kann.

Somit ist gewährleistet, dass zumindest der die Messstrecke 42 definierende Bereich der Maßstreckeneinheit 37 von eventuellen wärmebedingten Längendehnungen der ersten Vorrichtungskomponente 2 unbeeinflusst bleibt, sodass derartige Längendehnungen keine Längenveränderungen der Messstrecke 42 hervorrufen, die das durch den Messaufnehmer 33 erfassbare Messergebnis verfälschen. Dadurch ist bereits ein erster Schritt getan, um die Messgenauigkeit des Wegmesssystems 28 von Temperaturschwankungen unabhängiger zu machen.

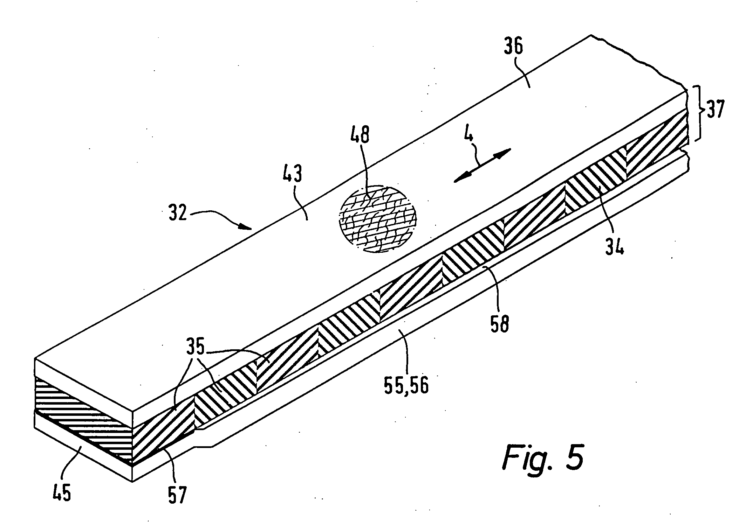

Hinzu kommt aber noch ein zweiter Schritt, der letztlich die Temperaturanfälligkeit des Wegmesssystems 28 in weiten Temperaturbereichen noch weiter verringert. Beide Schritte gemeinsam tragen dazu bei, dass die Messfehler auf eine Toleranzbreite von +/- 0,015 mm und noch darunter reduziert werden, also in einem Bereich liegen, der der Güte des elektronischen Messsystems als solches entspricht, sodass von einer äußersten Exaktheit und Wiederholgenauigkeit des Wegmesssystems gesprochen werden kann. Der schon angesprochene zweite Schritt besteht darin, dass der Trägerstreifen 36 als über Verstärkungsfasern 48 (siehe Fig. 5) verfügender Faserverbundkörper ausgeführt ist, der materialtechnisch so ausgelegt ist, dass sich in Abstimmung mit dem Dehnungsverhalten des an ihm befestigten Magnetstreifens 34 für die gesamte Maßstreifeneinheit 37 in deren Längsrichtung ein Wärmeausdehnungskoeffizient ergibt, der zumindest annähernd und vorzugsweise genau gleich null ist. Dieser resultierende Wärmeausdehnungskoeffizient der Maßstreifeneinheit 37 sei im Folgenden als Gesamt-Wärmeausdehnungskoeffizient bezeichnet.

Erreichen lässt sich der gewünschte Gesamt-Wärmeausdehnungskoeffizient insbesondere unter Verwendung von Verstärkungsfasern, bei denen es sich um Kohlenstofffasern und/oder um Aramidfasern handelt. Als Kohlenstofffaser kann beispielsweise auf sogenanntes Tenax zurückgegriffen werden, dessen Wärmeausdehnungskoeffizient in Faser-Längsrichtung bei -0,1 * 10⁻⁶ K⁻¹ liegt. Bei Aramid empfiehlt sich der Einsatz von sogenanntem Kevlar oder Twaron mit einem typischen Wärmeausdehnungskoeffizienten in Faser-Längsrichtung im Bereich von -3,5 * 10⁻⁶ K⁻¹.

Es kann auf einen Fasermix wie auch auf eine einheitliche Faserverwendung zurückgegriffen werden.

Als besonders vorteilhaft hat es sich erwiesen, die Verstärkungsfasern in Gestalt eines Fasergewebes zu dem Faserverbundkörper zu verarbeiten, sodass nicht nur eine hohe Festigkeit, sondern bei Bedarf auch eine gewisse Biegeelastizität in der Querrichtung der Maßstreifeneinheit 37 erzielbar ist. In Verbindung mit dem das Fasergewebe umschließenden Harz lässt sich überdies jede geeignete Formgebung mit zugleich glatter Oberfläche relativ einfach bewerkstelligen.

Geht man also davon aus, dass der die Messstrecke 42 enthaltende Längenabschnitt 43 der Maßstreifeneinheit 37 von eventuellen Längsdehnungen der die Maßverkörperung 32 tragenden ersten Vorrichtungskomponente 2 unbeeinflusst bleibt und dass ferner die eigene, in Richtung der Arbeitsbewegung 4 auftretende Wärmedehnung der Maßstreifeneinheit 37 nahezu bei null liegt, ist leicht verständlich, dass hier sehr präzise Wegmessungen, unabhängig von gewissen Temperaturschwankungen, vorgenommen werden können.

Vor allem wenn die Maßstreifeneinheit 37 in Querrichtung etwas labil ist, empfehlen sich zusätzliche stabilisierende Maßnahmen. So kann beispielsweise eine in Fig. 1 strichpunktiert angedeutete Stabilisierungsfeder 52 vorgesehen werden, die zwischen dem freien Ende 47 und der ersten Vorrichtungskomponente 2 wirksam ist, sodass die Maßstreifeneinheit 37 unter eine gewisse axiale Zugvorspannung gesetzt wird.

Zusätzlich oder alternativ können an der ersten Vorrichtungskomponente 2 geeignete Abstützmittel 53 vorgesehen werden, die eine Querabstützung der Maßverkörperung 32 bewirken, ohne die relative Beweglichkeit mit Bezug zur ersten Vorrichtungskomponente 2 in Richtung der Arbeitsbewegung 4 zu beeinträchtigen.

Ist die Maßverkörperung 32 außen an die erste Vorrichtungskomponente 2 angebaut, können die Abstützmittel 53 als Abstützflächen ausgeführt werden, die die streifenförmige Maßverkörperung 32 an den beiden Randseiten flankieren. Die Abstützflächen könnten dabei gemäß Fig. 1 an mehreren, in Streifen-Längsrichtung beabstandeten Stellen vorgesehen sein. Möglich wäre es allerdings auch, auf in Längsrichtung durchgehende Abstützflächen zurückzugreifen und die streifenförmige Maßverkörperung 32 beispielsweise in einer mit der ersten Vorrichtungskomponente 2 verbundenen nutartigen Vertiefung zu lagern.

Eine andere Ausführungsmöglichkeit offenbaren die Fig. 3 und 4. Dort sind die Abstützmittel 53 von den Innenflächen eines umfangsseitig geschlossenen Aufnahmekanals 54 der ersten Vorrichtungskomponente 2 gebildet. Dieser Aufnahmekanal 54 kann ein integrierter oder angebauter Kanal sein. Unabhängig davon, ob er zur Abstützung der Maßverkörperung 32 beiträgt oder nicht, bewirkt der Aufnahmekanal 54 auf jeden Fall einen guten Schutz der Maßverkörperung 32 vor möglichen Beschädigungen. Aufgrund der berührungslosen Kooperation mit dem Messaufnehmer 33 wird der Messvorgang durch die gekapselte Unterbringung der Maßverkörperung 32 nicht beeinträchtigt.

Wenn der Messaufnehmer 33 über eine ausreichend hohe Empfindlichkeit verfügt, können die vom Magnetstreifen 34 generierten magnetischen Betätigungssignale unmittelbar ausreichend sein, um eine zuverlässige Messung zu ermöglichen. Wird eine höhere Feldstärke gewünscht, kann dem jedoch durch längs der Maßstreifeneinheit 37 verlaufende ferromagnetische Rückschlussmittel 55 Rechnung getragen werden.

Bei dem Ausführungsbeispiel der Fig. 1 besteht die die Maßstreifeneinheit 37 definierende erste Vorrichtungskomponente 2 wenigstens in der Nachbarschaft zu dem Längenabschnitt 43 selbst aus einem ferromagnetischen Material und bildet mithin die erwähnten Rückschlussmittel 55. Dadurch erübrigen sich Rückschlussmaßnahmen an der Maßverkörperung 32 selbst, mit der Folge, dass die Maßverkörperung 32 gemäß Fig. 2 ausschließlich aus der Maßstreifeneinheit 37 bestehen kann.

Um vom Material der ersten Vorrichtungskomponente 2 unabhängig zu sein, besteht jedoch die bei den Ausführungsformen der Fig. 3 bis 6 realisierte Möglichkeit, Rückschlussmaßnahmen in die Maßverkörperung 32 zu integrieren.

Diese Integration geschieht zweckmäßigerweise dadurch, dass die Rückschlussmittel 55 in Gestalt eines sich parallel zu der Maßstreifeneinheit 37 erstreckenden ferromagnetischen Rückschlussstreifens 56 ausgeführt werden, der lediglich an dem Befestigungsende 45 fest mit der Maßstreifeneinheit 37 verbunden ist, während er im Übrigen, zumindest in der Richtung der Arbeitsbewegung 4, schwimmend bezüglich der Maßstreifeneinheit 37 angeordnet ist.

Auf diese Weise ist gewährleistet, dass der Rückschlussstreifen 56 eine Baueinheit mit der Maßstreifeneinheit 37 darstellt und gemeinsam mit dieser die streifenförmige Maßverkörperung 32 bildet, zugleich aber, wie schon in Bezug auf die erste Vorrichtungskomponente 2, in axialer Richtung eine Entkoppelung des die Messstrecke 42 definierenden Längenabschnittes 43 der Maßstreifeneinheit 37 von dem Rückschlussstreifen 56 erzielt wird.

Aufgrund der ferromagnetischen Eigenschaften verfügt der Rückschlussstreifen 56 als solches über einen relativ großen Wärmeausdehnungskoeffizienten. Mangels fester Verbindung zu dem Längenabschnitt 43 wirkt sich seine Längendehnung jedoch nicht auf diejenige des erwähnten Längenabschnittes 43 aus.

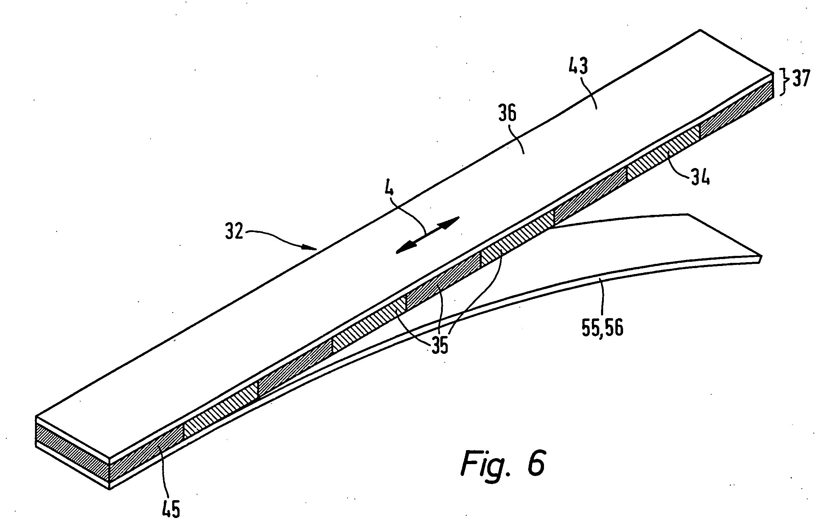

Als optimal wird dabei eine Anordnung angesehen, bei der der Magnetstreifen 34 gemäß Fig. 5 und 6 sandwichartig zwischen dem Trägerstreifen 36 und dem Rückschlussstreifen 56 angeordnet ist.

Der Rückschlussstreifen 56 kann beispielsweise ein Stahlstreifen sein, der gemäß Fig. 5 über eine hohe Eigensteifigkeit verfügt oder gemäß Fig. 6 relativ dünn und elastisch ist, sodass er mangels anderweitiger Fixiermittel von der Maßstreifeneinheit 37 weggebogen werden kann.

In Fig. 5 erkennt man bei 57 den Befestigungsbereich zwischen dem Rückschlussstreifen 56 und der Maßstreifeneinheit 37 sowie einen sich daran anschließenden, durch einen schmalen Spalt kenntlich gemachten losen Bereich 58 zwischen dem Rückschlussstreifen 56 und dem Längenabschnitt 43. In der Praxis wird der Rückschlussstreifen 56 nicht abgestuft sein und einen ebenen Verlauf haben. Der genannte Spalt ist lediglich zur Verdeutlichung des losen Bereiches 58 illustriert.

Um die schwimmende Beziehung zwischen dem Rückschlussstreifen 56 und der Maßstreifeneinheit 37 zu erhalten, könnte anstelle des gezeigten vollständigen Verzichts auf jegliche Verbindung auch auf eine nachgiebige Verbindung, beispielsweise mittels eines Elastomerwerkstoffes, zurückgegriffen werden. Dadurch lässt sich über die gesamte Länge der Maßverkörperung 32 ein Zusammenhalt der einzelnen Schichten gewährleisten, ohne die freie Beweglichkeit zwischen dem Rückschlussstreifen 56 und dem Längenabschnitt 43 zu beeinträchtigen.

## Patentansprüche

1. Linearantriebsvorrichtung, mit einer ersten und einer zweiten Vorrichtungskomponente (2, 3), von denen die eine relativ zur anderen zu einer linearen Arbeitsbewegung (4) antreibbar ist, und mit einem Wegmesssystem (28) zur Erfassung der momentan zwischen den beiden Vorrichtungskomponenten (2, 3) eingenommenen Relativposition, das eine an der ersten Vorrichtungskomponente (2) angeordnete, in Richtung der Arbeitsbewegung (4) ausgerichtete streifenförmige Maßverkörperung (32) mit einer aus einem Trägerstreifen (36) und einem längsseits daran befestigten, wechselpolig magnetisierten Magnetstreifen (34) bestehenden Maßstreifeneinheit (37) aufweist, und das einen an der zweiten Vorrichtungskomponente (3) angeordneten, zum berührungslosen Abtasten des Magnetstreifens (34) dienenden Messaufnehmer(33) aufweist, wobei sich der Messaufnehmer (33) und die Maßverkörperung (32) bei der Arbeitsbewegung (4) entlang einer Messstrecke (42) der Maßstreifeneinheit (37) relativ zueinander bewegen, **dadurch gekennzeichnet, dass** die Messstrecke (42) von einem Längenabschnitt (43) der Maßstreifeneinheit (37) gebildet ist, der mit einem Befestigungsende (45) in Richtung der Arbeitsbewegung (4) unbeweglich an einer Bezugsstelle (46) der ersten Vorrichtungskomponente (2) fixiert und im Übrigen zumindest in Richtung der Arbeitsbewegung (4) schwimmend bezüglich der ersten Vorrichtungskomponente (2) angeordnet ist, sodass die Messstrecke (42) hinsichtlich Längsdehnungen von der ersten Vorrichtungskomponente (2) entkoppelt ist, und dass der Trägerstreifen (36) als Verstärkungsfasern (48) enthaltender Faserverbundkörper ausgeführt ist, der so auf den an ihm befestigten Magnetstreifen (34) abgestimmt ist, dass der Wärmeausdehnungskoeffizient der Maßstreifeneinheit (37) in Längsrichtung zumindest annähernd gleich null ist.

2. Linearantriebsvorrichtung nach Anspruch 1, **dadurch gekennzeichnet, dass** die Verstärkungsfasern (48) als Fasergewebe ausgeführt sind.

3. Linearantriebsvorrichtung nach Anspruch 1 oder 2, **dadurch gekennzeichnet, dass** es sich bei den Verstärkungsfasern (48) wenigstens zum Teil um Kohlenstofffasern handelt.

4. Linearantriebsvorrichtung nach einem der Ansprüche 1 bis 3, **dadurch gekennzeichnet, dass** es sich bei den Verstärkungsfasern (48) wenigstens zum Teil um Aramidfasern handelt.

5. Linearantriebsvorrichtung nach einem der Ansprüche 1 bis 4, **dadurch gekennzeichnet, dass** der Magnetstreifen (34) mit dem Trägerstreifen (36) vollflächig verklebt ist.

6. Linearantriebsvorrichtung nach einem der Ansprüche 1 bis 5, **dadurch gekennzeichnet, dass** die Maßverkörperung (32) einen sich parallel zu der Maßstreifeneinheit (37) erstreckenden ferromagnetischen Rückschlussstreifen (56) aufweist, der lediglich an dem Befestigungsende (45) fest mit der Maßstreifeneinheit (37) verbunden und im Übrigen zumindest in Richtung der Arbeitsbewegung (4) schwimmend bezüglich der Maßstreifeneinheit (37) angeordnet ist.

7. Linearantriebsvorrichtung nach Anspruch 6, **dadurch gekennzeichnet, dass** der schwimmend angeordnete Längenabschnitt des Rückschlussstreifens (56) lose bezüglich der Maßstreifeneinheit (37) angeordnet ist.

8. Linearantriebsvorrichtung nach Anspruch 6 oder 7, **dadurch gekennzeichnet, dass** der Magnetstreifen (34) zwischen dem Trägerstreifen (36) und dem Rückschlussstreifen (56) angeordnet ist.

9. Linearantriebsvorrichtung nach einem der Ansprüche 1 bis 8, **dadurch gekennzeichnet, dass** an dem dem Befestigungsende (45) entgegengesetzten Ende der Maßstreifeneinheit (37) eine an der ersten Vorrichtungskomponente (2) angreifende Stabilisierungsfeder (52) angreift, die die Maßstreifeneinheit (37) unter axiale Zugspannung setzt.

10. Linearantriebsvorrichtung nach einem der Ansprüche 1 bis 9, **dadurch gekennzeichnet, dass** die Maßverkörperung (32) in einem umfangsseitig geschlossenen Aufnahmekanal (54) der ersten Vorrichtungskomponente (2) angeordnet ist.

11. Linearantriebsvorrichtung nach einem der Ansprüche 1 bis 10, **dadurch gekennzeichnet, dass** sie mit durch Fluidkraft betätigbaren Antriebsmitteln (15, 16) ausgestattet ist.

12. Linearantriebsvorrichtung nach einem der Ansprüche 1 bis 10, **dadurch gekennzeichnet, dass** sie mit elektrisch betätigbaren Antriebsmittel (15, 25) ausgestattet ist, bei denen es sich insbesondere um einen elektrodynamischen Lineardirektantrieb handelt.

13. Linearantriebsvorrichtung nach einem der Ansprüche 1 bis 12, **dadurch gekennzeichnet, dass** die eine Vorrichtungskomponente eine Stationärkomponente (5) und die andere Vorrichtungskomponente eine diesbezüglich bewegbare Abtriebskomponente (6) bildet.

14. Linearantriebsvorrichtung nach einem der Ansprüche 1 bis 12, **dadurch gekennzeichnet, dass** an der ersten Vorrichtungskomponente (2) Abstützmittel (53) zur Querabstützung der Maßverkörperung (32) vorgesehen sind.
